Europäisches Patentamt

European Patent Office

Office européen des brevets

(11) Veröffentlichungsnummer: **0 468 321 A1**

# (12) EUROPÄISCHE PATENTANMELDUNG

(21) Anmeldenummer: **91111703.4**

(22) Anmeldetag: **13.07.91**

(51) Int. Cl.5: **B29C 67/22**, B01F 5/04, B01F 5/10

(30) Priorität: **27.07.90 DE 4023819**

(43) Veröffentlichungstag der Anmeldung:
**29.01.92 Patentblatt 92/05**

(84) Benannte Vertragsstaaten:
**DE GB IT**

(71) Anmelder: **ELASTOGRAN POLYURETHANE GMBH**
**Landwehrweg**
**W-2844 Lemförde(DE)**

(72) Erfinder: **Becker, Hunther**

Dompfaffenweg 3
W-8192 Geretsried 1(DE)
Erfinder: **Reisinger, Gerhard**
Zugspitzstrasse 5
W-8025 Unterhaching(DE)
Erfinder: **Taubenmenn, Peter**
Strindbergstrasse 1
W-8000 München 60(DE)

(74) Vertreter: **Karau, Wolfgang, Dr. et al**
**BASF Aktiengesellschaft Carl-Bosch-Strasse 38**
**W-6700 Ludwigshafen(DE)**

(54) Vorrichtung zum Erzeugen eines Mehrkomponenten-Kunststoffes, insbesondere Polyurethan, in einer Doppelbandanlage.

(57) Die Vorrichtung zum Erzeugen eines Mehrkomponenten-Kunststoffes, insbesondere Polyurethan, in einer Doppelbandanlage enthält einen Mischkopf und eine den Mischkopf mit einem Tanklager, ggf. über eine Vormischstation (2) und Dosierpumpe (7) verbindende Förderleitung für jede Komponente. In der Förderleitung zumindest einer Komponente, vorzugsweise der Polyolkomponente, ist stromaufwärts von der Dosierpumpe eine Vorförderpumpe (5) angeordnet, der über eine Meß- und Regeleinrichtung (12) feine Gasblasen, vorzugsweise Luft, zugeführt werden. Hierdurch ist es möglich, eine Gasbeladung on-line durchzuführen. Die Vorrichtung ist besonders einfach aufgebaut.

FIG. 1

Die Erfindung betrifft eine Vorrichtung nach dem Oberbegriff des Patentanspruchs 1.

Derartige Vorrichtungen sind in den unterschiedlichsten Ausgestaltungen bekannt. Die Doppelbandanlagen sind durch zwei übereinanderliegende Förderbänder gebildet, die zwischen sich einen Raum begrenzen, in dem das Kunststoffgemisch aufschäumt.

Die Kunststoffkomponenten werden in einem Mischkopf gemischt, der im Eintrittsbereich der Doppelbandanlage quer zur Förderrichtung hin- und herbewegbar ist, um das Gemisch aufzutragen. Die Komponenten werden über Dosierpumpen von einem Tanklager zum Mischkopf gefördert. In der Vormischstation werden Katalysatoren, Aktivatoren und ggf. Treibmittel, hinzugefügt.

Aus der DE-PS 34 16 442 ist es bekannt, einer Komponente, vorzugsweise der Polyolkomponente, Gas zuzuführen und dieses in der Komponente fein zu verteilen. Diese sog. Gasbeladung begünstigt die Bildung des Kunststoffes in der gewünschten Struktur. Bei der aus der genannten DE-PS 34 16 442 bekannten Vorrichtung erfolgt die Gasbeladung in einem getrennten Kreislauf, der neben dem Komponentenvor- und -rücklauf vorgesehen ist.

Durch den getrennten Kreislauf, der einen mehrfachen Durchlauf ermöglicht, wird die entsprechende Gasbeladung sichergestellt. Es wird aber ein beträchtlicher Aufwand in Kauf genommen. Es ist auch schon vorgeschlagen worden, einen mechanischen Rührer einzusetzen, um eine Dispersion durchzuführen und die Aufnahme der erforderlichen Gasmenge sicherzustellen.

Der Erfindung liegt nun die Aufgabe zugrunde, eine Vorrichtung der eingangs genannten Art, d.h. für eine Doppelbandanlage zu schaffen, bei der ein Komponentenrücklauf nicht vorhanden ist.

Diese Aufgabe wird durch das Kennzeichen des Anspruchs 1 gelöst.

Erfindungsgemäß wird auf einen gesonderten Kreislauf verzichtet. Die Vorförderpumpe, durch die das Gas zugeführt wird, ist unmittelbar in der Komponentenleitung zwischen Tanklager und Dosierpumpe angeordnet. Hierdurch wird eine einfach aufgebaute Vorrichtung geschaffen, bei der die Gasmenge proportional und on-line zugeführt wird. Es erfolgt also eine kontinuierliche Gasbeladung in der Komponentenleitung vom Tank zum Mischkopf.

Überraschenderweise gelingt es, mit dieser Anordnung auf sehr einfache Weise auch ohne Gasmengen zuzuführen, fein zu dispergieren und jedenfalls das gesamte Gas auf der Strecke bis zum Mischkopf in Lösung zu bringen.

In vorteilhafter Weise ist die Vorrichtung so ausgestaltet, wie im Anspruch 2 angegeben. Durch die Einrichtung eines derartigen Teilstromes wird eine überschüssige Fördermenge abgezweigt, die der kontrollierten Aufrechterhaltung des Vorförderdruckes dient. Der Dosierpumpe wird auf diese Weise eine Komponente, vorzugsweise Polyol, zugefördert, wobei die Gasanteile volumetrisch richtig verteilt zur Verfügung stehen. Durch die eingestellten Druckverhältnisse entstehen sehr kleine Gasblasen, die schließlich in Lösung gehen. Es ist daher möglich, mit der Dosierpumpe eine volumetrische Dosierung hoher Genauigkeit durchzuführen. Hierdurch ist es möglich den Treibmittelanteil stark zu reduzieren oder ganz ohne Treibmittel zu arbeiten.

In vorteilhafter Weise ist die Vorrichtung im Bereich der Gaszuführung so ausgestaltet, wie in den Ansprüchen 3 bis 5 angegeben.

Im folgenden wird die Erfindung unter Hinweis auf die Zeichnung anhand einer Ausführungsform näher erläutert.

Es zeigt:

Fig. 1 eine schematische Darstellung des Komponentenverlaufes vom Tanklager zum Mischkopf;

Fig. 2 eine teilweise geschnittene Ansicht der verwendeten Vorförderpumpe; und

Fig. 3 eine Einzelheit E der Fig. 2 im vergrößerten Maßstab.

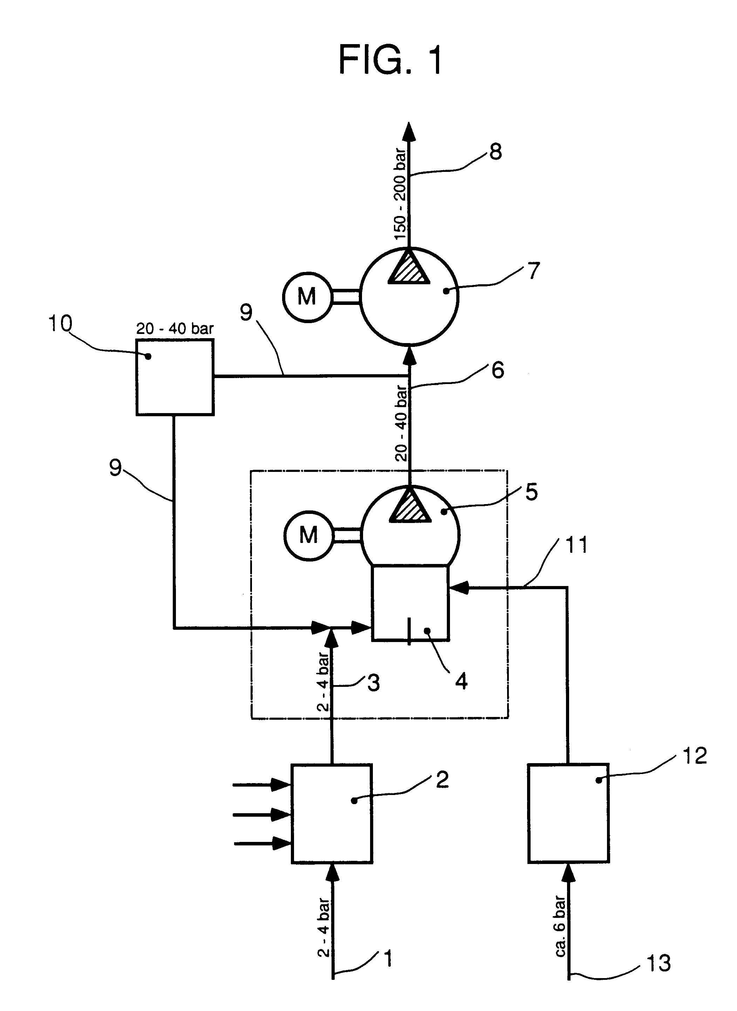

Die Vorrichtung besteht aus einer vom Tanklager kommenden Förderleitung 1, die zu einer Vormischstation 2 führt, in der Aktivatoren, Katalysatoren und Treibmittel zugegeben werden. Von der Vormischstation 2 verläuft die Förderleitung 3 zu einer Vorförderpumpe 5, an deren Eingang eine Gasdispergiereinrichtung 4 vorgesehen ist. Die Gasdispergiereinrichtung 4 ist unmittelbar vor und räumlich unterhalb der Vorförderpumpe 5 angeordnet. Dieses ist auch den Fig. 1 bis 3 zu entnehmen, die die räumliche Anordnung in der genannten Weise (Gasdispergiereinrichtung 4 unmittelbar vor und unterhalb der Vorförderpumpe 5) zeigen. Die Vorförderpumpe 5 fördert das nunmehr mit Gas beladene Gemisch durch die Leitung 6 unter höherem Druck zu der eigentlichen Dosierpumpe 7. Von der Dosierpumpe 7 geht eine Vorlaufleitung 8 zum nicht gezeigten Mischkopf.

Im Bereich der Förderleitung 6 zwischen Vorförderpumpe 5 und Dosierpumpe 7 zweigt eine Teilstromleitung 9 ab, in die ein Druckbegrenzungsventil 10 eingeschaltet ist. Diese Teilstromleitung 9 mündet in die Gasdispergiereinrichtung 4.

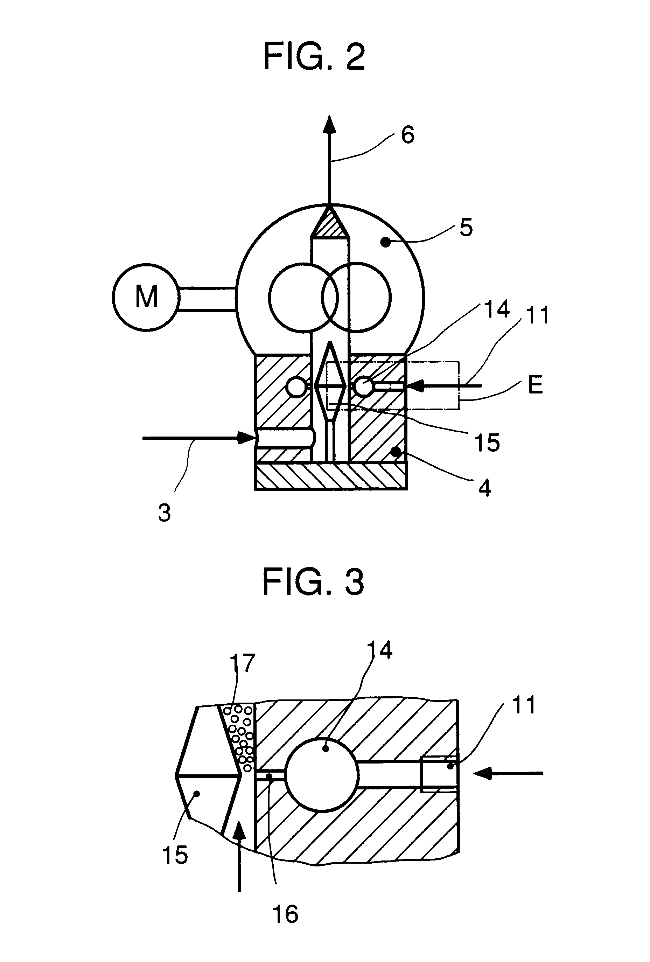

Das Gas wird unter Druck durch eine Leitung 13 in eine Meß- und Regeleinrichtung 12 gefördert und strömt von da durch eine Gasleitung 11 in die Gasdispergiereinrichtung 4. Einzelheiten der Gasdispergiereinrichtung sind in den Fig. 2 und 3 dargestellt. Die Gasleitung 11 mündet in einen Ringkanal 14, der in einer Ebene senkrecht zu der Strömungsrichtung der Komponente in die Vorförderpumpe 5 liegt. Aus dem Ringkanal 14 führt eine Vielzahl kleiner Düsen 16 in den Bereich der Komponentenleitung. In diesem Bereich der Komponentenleitung ist ein Verdrängerkörper 15 angeordnet, der in den Fig. 2 und 3 deutlich erkennbar ist. Er hat seinen größten Querschnitt im Bereich der Gasdüsen 16. Die zugeführten feinen und dort entstehenden Gasblasen sind mit 17 bezeichnet.

Im Betrieb wird das Gas, d.h. in diesem Falle die Luft, in der Meß- und Regeleinrichtung 12 dosiert und unmittelbar vor der Vorförderpumpe 5 in Form feiner Gasblasen mit Hilfe der Gasdispergiereinrichtung 4 zugeführt. Dieses erfolgt bei niedrigem Druck von etwa 3 bar, wobei die besonders gestaltete Engstelle eher noch eine Druckabsenkung ermöglicht, die mit einer Geschwindigkeitserhöhung des Komponentenstromes verbunden ist.

Das zugeführte Gas wird auf diese Weise sehr feinteilig in die Komponente eingebracht, wobei jede Gasblase, entsprechend dem niedrigen Druck, nur eine geringe Gasmenge enthält. Auf kürzestem Weg steigt nun das Gemisch nach oben in den Saugraum der Vorförderpumpe 5. Durch die sehr kurze Verweilzeit in diesem Bereich wird eine Koaleszenz von Gasblasen vermieden. Besonders vorteilhaft ist es, daß die Fließrichtung des Gemisches und die aufsteigenden Gasbläschen senkrecht nach oben geführt werden. Bei einer horizontalen Fließrichtung mit senkrecht aufsteigenden Gasbläschen könnte eine Trennung des Gemisches und eine lokale Anreicherung und Koaleszenz von Gasblasen auftreten.

Unmittelbar danach erfolgt durch die Vorförderpumpe 5 eine Druckerhöhung auf 20 bis 40 bar. Durch die mechanische Verarbeitung in der Vorförderpumpe werden die Gasblasen noch zerteilt, auf jeden Fall wird aber eine Koaleszenz von Gasblasen verhindert. Durch die Druckerhöhung werden die Gasblasen stark verkleinert und das Gas zumindest teilweise in Lösung überführt.

Kurz vor der Dosierpumpe wird bei 9 ein Teilstrom abgezweigt, der über das Druckbegrenzungsventil 10 entspannt und zwischen der Vormischkammer und der Gaszudosierung zurückgeführt wird. Insbesondere bei hohen Gasmengen hat es sich erwiesen, daß dieser zugeführte Teilstrom zur Dispergierung und Lösung beiträgt. Dieses ist daran zu erkennen, daß bei kleinem Teilstrom und großen Gasmengen die vollständige Lösung möglicherweise nicht erreicht wird. Wird aber die Fördermenge der Vorförderpumpe bei konstanter Einstellung der Dosierpumpe erhöht, dann wird auch der zurückgeführte Teilstrom größer, und es wird die vollständige Lösung auch hoher Gasmengen erreicht.

Die Dosierpumpe komprimiert die mit Gas beladene Komponente auf einen Druck von 150 bis 200 bar, welche dann über die Stichleitung 6 zum Mischkopf gelangt. In der Dosierpumpe werden durch mechanische Bearbeitung feinste restliche Gasblasen weiter zerteilt. Diese gehen dann in der Stichleitung zu dem Mischkopf vollständig in Lösung, so daß dort keine Gasblasen mehr ankommen. Hierdurch wird sicher verhindert, daß bei dem plötzlichen Druckabfall in dem Mischkopf keine, auch nicht feine Gasblasen vorhanden sind, die schlagartig expandieren würden und insbesondere den Auslaufvorgang bei der Beschichtung im Doppelband stören würden. Im Gegensatz dazu wird durch die Druckabsenkung das gelöste Gas äußerst feinzellig frei und entfaltet dabei die gewünschte, vorteilhafte Wirkung als Vermischungshilfe, zur Nukleierung und Verbesserung des Startverhaltens der chemischen Reaktion und zur Verbesserung des Fließ- und Steigverhaltens des Kunststoffgemisches beim Einlauf in das Doppelband.

In Fig. 1 sind die vorteilhaften Druckbereiche in den einzelnen Leitungen angegeben.

**Patentansprüche**

1. Vorrichtung zum Erzeugen eines Mehrkomponenten-Kunststoffes, inbesondere Polyurethan, in einer Doppelbandanlage, mit einem Mischkopf, zu dem eine Förderleitung (1) für jede Komonente von einem Tanklager oder dergleichen über ggf. eine Vormischstation (2) und eine Dosierpumpe (7) führt, dadurch gekennzeichnet, daß in der Förderleitung (1) zumindest einer Komponente, vorzugsweise der Polyolkomponente, stromaufwärts von der Dosierpumpe (7) in an sich bekannter Weise eine Vorförderpumpe (5) angeordnet ist, der über eine Meß- und Regeleinrichtung (12) feine Gasblasen, vorzugsweise Luftblasen, zugeführt werden.

2. Vorrichtung nach Anspruch 1, dadurch gekennzeichnet, daß stromaufwärts, kurz vor der Dosierpumpe (7), eine Teilstromleitung (9) abzweigt, die über ein Druckbegrenzungsventil (10) in die Förderleitung (3) stromaufwärts von der Vorförderpumpe (5) einmündet.

3. Vorrichtung nach Anspruch 1, dadurch gekennzeichnet, daß unmittelbar vor und räumlich unter der Vorförderpumpe (5) eine Gasdispergiereinrichtung (4) angeordnet ist.

4. Vorrichtung nach Anspruch 1, dadurch gekennzeichnet, daß der Gaseinritt in den Bereich der Vorförderpumpe (5) über eine Gasdispergiereinrichtung (4) erfolgt, die einen Ringkanal (14) für den Gaszutritt aufweist, der um einen in dem Komponentenstrom angeordneten Verdrängerkörper (15) verläuft, und aus dem eine Vielzahl von Düsen (16) in den Bereich des Verdrängerkörpers führt.

5. Vorrichtung nach Anspruch 4, dadurch gekennzeichnet, daß der Verdrängerkörper (15) seinen größten Querschnitt in dem Bereich aufweist, in den die Düsen (16) führen.

# FIG. 1

# FIG. 2

# FIG. 3

# EUROPÄISCHER
# RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-1 589 306 (W. R. GRACE LIMITED) <br> * das ganze Dokument * * <br> – – – | 1-3 | B 29 C 67/22 <br> B 01 F 5/04 <br> B 01 F 5/10 |
| X | PATENT ABSTRACTS OF JAPAN vol. 7, no. 28 (C-149)(1173) 4. Februar 1983 <br> * Zusammenfassung * & JP-A-57 184 425 (HIDEOMI IWA-GOU) * <br> – – – | 1-3 | |
| A | WO-A-8 501 888 (SUNDS DEFRIBRATOR AKTIEBOLAG) <br> * Zusammenfassung; Ansprüche; Abbildung 2 * * <br> – – – | 4-5 | |
| A | US-A-3 230 972 (WALTER H. DAVIS) <br> * das ganze Dokument * * <br> – – – | 4-5 | |
| D,A | DE-C-3 416 442 (BASF AG) <br> * das ganze Dokument * * <br> – – – – – | 1-3 | |

| RECHERCHIERTE SACHGEBIETE (Int. Cl.5) |
|---|
| B 29 C <br> B 01 F |

Der vorliegende Recherchenbericht wurde für alle Patentansprüche erstellt

| Recherchenort | Abschlußdatum der Recherche | Prüfer |
|---|---|---|
| Den Haag | 05 November 91 | JENSEN K.S. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument